# FASCICULE DE BREVET EUROPEEN

(11) **EP 2 022 946 B1**
(45) Date de publication et mention de la délivrance du brevet: **16.06.2010**
(21) Numéro de dépôt: 08161954.6
(22) Date de dépôt: 06.08.2008
(51) Int. Cl.: F01D 15/10, F02K 3/06

(54) **Turboréacteur comprenant un générateur de courant monté dans la soufflante et un procédé de montage dudit générateur dans la soufflante**
Turbotriebwerk, dass einen Stromgenerator umfasst, der ins Gebläse eingebaut ist, und Montageverfahren besagten Generators unter dem Gebläse
Jet engine comprising an electric generator mounted in the fan section and a method for mounting said generator in the fan section.

(30) Priorité: 07.08.2007 FR 0705757
(43) Date de publication de la demande: 11.02.2009
(73) Titulaire: SNECMA, 75015 Paris (FR)
(72) Inventeur: Beutin, Bruno, Albert, 91000, Evry (FR); Colin, Antoine, Olivier, François, 91800, Brunoy (FR)
(74) Mandataire: David, Daniel

(56) Documents cités:
- EP-A- 1 662 636
- GB-A- 1 174 969
- GB-A- 2 425 572
- US-A- 3 900 274
- US-A- 5 282 719

## Description

L'invention concerne un turboréacteur à turbine à gaz avec une soufflante amont et un procédé de montage d'un générateur de courant électrique dans le turboréacteur.

Une partie de la puissance générée par un turboréacteur aéronautique est utilisée pour alimenter différents organes, à la fois du turboréacteur mais aussi de l'aéronef dont le turboréacteur participe à la propulsion.

Une partie de cette puissance est actuellement prélevée au niveau du compresseur haute pression (HP), dont l'air comprimé est utilisé, notamment pour assurer la pressurisation et le conditionnement de la cabine de l'aéronef, ou encore le dégivrage. Une autre partie de cette puissance est prélevée mécaniquement sur l'arbre de l'étage HP du turboréacteur, pour entraîner l'arbre d'entrée d'un boîtier d'accessoires placé sur un carter du turboréacteur. Cet arbre d'entrée est entraîné en rotation par un arbre de transmission s'étendant dans un bras structural du carter et lui-même entraîné par un pignon solidaire de l'arbre HP.

La tendance actuelle vise à augmenter la puissance électrique installée, et donc les prélèvements de puissance mécanique sur le moteur.

Cependant, un prélèvement de puissance mécanique trop élevé a un effet négatif sur le fonctionnement du corps HP, car il est susceptible d'affecter l'opérabilité du moteur, en particulier quand le moteur fonctionne à bas régime.

Par ailleurs, on connaît par le brevet US5,282,719 un générateur de courant agencé pour alimenter un actionneur modifiant l'angle d'attaque des aubes d'un moteur à turbine à gaz. On connaît également la demande de brevet GB-A-1 174 969 présentant un moteur à turbine à gaz comprenant un alternateur. La partie rotorique de l'alternateur est supportée par un disque de rotor du compresseur tandis que la partie statorique est supportée par une partie fixe du compresseur.

Il est connu par la demande de brevet FR2882096 de prélever une partie de la puissance mécanique sur le corps basse pression (BP) pour entraîner en rotation l'arbre d'entrée d'un boîtier d'accessoires. Une telle solution nécessite de modifier structuralement l'arbre BP 2 en lui adjoignant un pignon de transmission de puissance. Le montage d'un tel système est contraignant car il nécessite de déplacer des pièces métalliques volumineuses et de masse importante.

Il est également connu par la demande de brevet WO2007/036202 de monter un générateur de courant électrique dans le corps du turboréacteur. Le générateur est composé d'un élément statorique, disposé circonférentiellement dans le carter de compression du turboréacteur, et d'éléments rotoriques fixés aux extrémités d'aubes solidaires de l'arbre HP et entraînées en rotation dans le carter de compression du turboréacteur.

Le mouvement de rotation des éléments rotoriques induit un courant dans l'élément statorique qui est transmis aux différents équipements à alimenter. Un tel générateur de courant est difficile d'accès et implique de démonter partiellement le turboréacteur lors de son remplacement ou de son entretien. Le carter de compresseur est de dimension réduite ce qui complique l'acheminement du courant généré vers les différents équipements.

Afin de palier au moins certains de ces inconvénients, la demanderesse a propose un turboréacteur à turbine à gaz à double corps, comportant un rotor haute pression et un rotor basse pression, l'arbre du rotor basse pression étant relié, à son extrémité amont, à une soufflante logée dans un carter de soufflante, caractérisé par le fait qu'il comporte, en amont de la soufflante, un élément de capot fixe centré sur l'axe du moteur, sur lequel est monté un générateur de courant électrique agencé pour prélever la puissance mécanique de l'arbre du rotor basse pression et la convertir en puissance électrique.

Le turboréacteur permet avantageusement de ne pas prélever de puissance sur l'arbre du rotor HP. Le générateur de courant est simple d'accès ce qui permet son remplacement en un temps limité en démontant un minimum de pièces du turboréacteur.

Le générateur de courant est placé en amont de la soufflante, dans une zone froide du turboréacteur, ce qui permet de réduire ses besoins en refroidissement et par conséquent sa masse.

Le générateur de courant comporte un élément statorique, relié à l'élément de capot fixe, un élément rotorique étant entraîné par l'extrémité amont de l'arbre du rotor basse pression.

Selon un mode de réalisation, le turboréacteur comporte un disque de soufflante sur lequel sont montées les aubes de soufflante. Un élément rotorique du générateur de courant est entraîné en rotation par un tourillon solidaire dudit disque de soufflante.

L'élément de capot est avantageusement relié au carter de soufflante par des bras de maintien radiaux.

Les bras radiaux permettent de maintenir fixement l'élément statorique du générateur sans engendrer de modifications structurales importantes du turboréacteur.

Des conduits de lubrification du générateur de courant et des câbles électriques sont ménagés dans les bras de maintien radiaux.

Selon un autre mode de réalisation, des pignons de transmission de puissance sont respectivement formés sur l'élément rotorique du générateur de courant et sur l'extrémité amont de l'arbre du rotor basse pression, les pignons engrenant l'un dans l'autre pour transmettre le mouvement de rotation de l'arbre du rotor basse pression à l'élément rotorique du générateur de courant.

L'invention concerne également un procédé de montage d'un générateur de courant dans la soufflante d'un turboréacteur à gaz, dans lequel :
- on monte le générateur de courant sur l'élément de capot fixe;
- on dispose l'élément de capot fixe sur la soufflante de manière à ce que l'élément rotorique du générateur entre en correspondance avec l'extrémité amont de l'arbre du rotor basse pression; et
- on immobilise l'élément de capot fixe sur le carter de soufflante avec les bras de maintien radiaux.

Le montage du générateur est simple et est réalisé en amont du turboréacteur. Les pièces manipulées sont de taille réduite et de masse faible ce qui permet un remplacement rapide du générateur de courant.

D'autres caractéristiques et avantages ressortiront de la description qui suit du turboréacteur de l'invention en référence aux figures sur lesquelles :
- la figure 1 représente une vue en coupe de la partie amont d'un turboréacteur selon l'invention avec un générateur de courant placé dans la soufflante du turboréacteur;
- la figure 2 représente une vue rapprochée du générateur de courant de la figure 1 ;
- la figure 3 représente une autre forme de réalisation de l'invention ; et
- la figure 4 représente une vue d'ensemble du turboréacteur de l'invention.

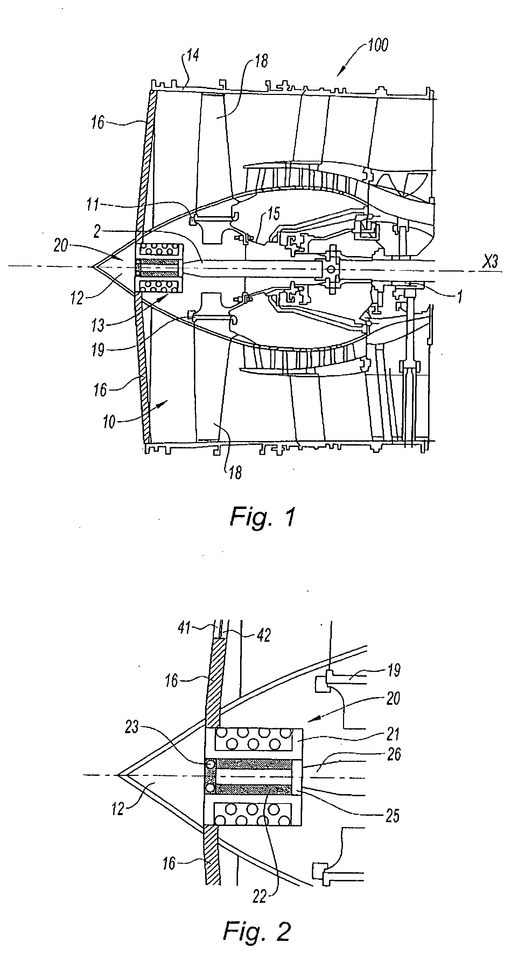

En référence à la figure 1, le turboréacteur de l'invention est un turboréacteur à gaz à double corps 100, comportant un rotor basse pression (BP) et un rotor haute pression (HP) 1, montés rotatifs autour de l'axe X3 du turboréacteur. Ce type de turboréacteur est bien connu de l'homme du métier. Par interne ou externe, ou intérieur ou extérieur, on entendra, dans la description, interne ou externe, ou intérieur ou extérieur, au turboréacteur, radialement, par rapport à son axe X3.

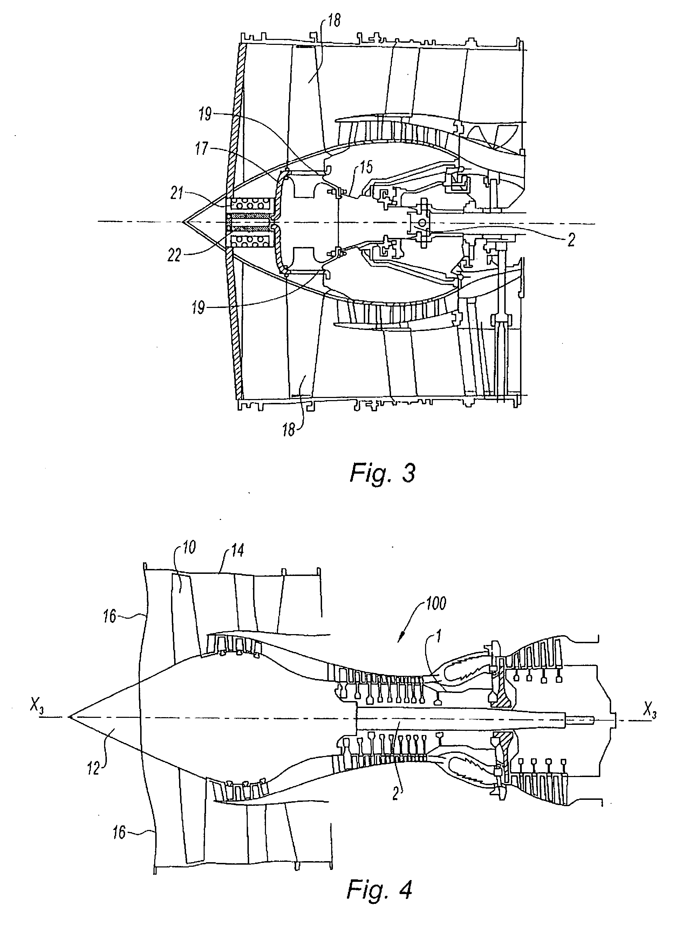

Plus précisément, en référence à la figure 4, le turboréacteur comporte fonctionnellement, d'amont en aval dans le sens d'écoulement des gaz, une soufflante 10, un compresseur, une chambre de combustion, une turbine et une tuyère d'éjection. Comme il est à double corps, il comporte un compresseur BP, en amont d'un compresseur HP, et une turbine HP, en amont d'une turbine BP.

La soufflante 10, figure 1, comprend un disque de soufflante 19 fixé par une bride à un tourillon 15, lui même supporté par un palier solidaire du carter intermédiaire, le tourillon 15 étant ici solidaire de l'arbre basse pression 2.

La soufflante 10 comprend, en outre, un élément de capot mobile 11 qui vient se fixer sur le disque de soufflante 19. L'élément de capot mobile 11 est de forme tronconique et permet de guider la veine d'entrée d'air. Un élément de capot fixe 12 est disposé en amont de l'élément de capot mobile 11.

La soufflante 10 est entraînée en rotation dans le carter de soufflante 14 par l'arbre de rotor BP 2 solidaire en rotation de l'élément de capot mobile 11. Un logement 13 est ménagé dans l'élément de capot mobile 11.

En référence à la figure 1 et plus particulièrement à la figure 2, un générateur de courant électrique 20 est monté sur l'élément de capot fixe 12, le générateur 20 comprenant un élément statorique 21, relié solidairement à l'élément de capot fixe 12, et un élément rotorique 22 libre en rotation par rapport à l'élément de capot fixe 12.

L'élément rotorique 22 est ici un électroaimant s'étendant axialement selon l'axe X3. L'élément statorique 21 est composé d'enroulements qui s'étendent coaxialement et extérieurement à l'élément rotorique 22. Un palier 23 supporte en rotation l'élément rotorique 21 dans l'élément statorique 21.

Lors de la rotation de l'électroaimant 22 autour de l'axe X3, un champ magnétique se créé et induit un courant électrique dans les enroulements 21.

Des bras de maintien radiaux 16 relient structuralement l'élément de capot fixe 12 au carter de soufflante 14, l'élément statorique 21 du générateur de courant 20 demeurant ainsi immobile lors de la rotation des aubes de soufflante 18. Les bras de maintien 16 sont fixés par une bride sur le carter de soufflante 14.

Les bras de maintien 16 sont avantageusement creux et permettent de loger des conduits 41 de lubrification du générateur de courant 20 et des câbles électriques 42 représentés sur la figure 2. Le bras de maintien supérieur 16 est représenté en transparence sur une partie de sa longueur afin de permettre l'observation des conduits 41 de lubrification du générateur de courant 20 et des câbles électriques 42.

Les conduits 41 de lubrification du générateur de courant 20 permettent d'acheminer un lubrifiant, tel que de l'huile, d'un réservoir d'huile, placé en aval de la soufflante, au générateur de courant 20 afin de permettre le refroidissement et la lubrification du générateur de courant 20.

Après avoir refroidi le générateur de courant 20, de l'huile chaude circule dans les bras de maintien 16 permettant ainsi aux bras d'être dégivrés et à l'huile d'être refroidie. De tels conduits 41 de lubrifications permettent de diminuer la taille des échangeurs destinés à refroidir ladite huile.

Les câbles électriques 42 permettent de conduire le courant généré dans les enroulements 21 vers des équipements électriques situés en aval du moteur.

Les bras de maintien 16 de l'élément de capot fixe 12 sont ici profilés de manière à conduire la veine d'air d'entrée vers les aubes de soufflante 18. Les bras de maintien 16 sont ici au nombre de trois, espacés angulairement de 120 degrés. Il va de soi que ce nombre peut évoluer selon la configuration du moteur.

Dans cet exemple de réalisation, l'élément rotorique 22 est directement relié à l'extrémité amont de l'arbre de rotor basse pression 2. Des pignons coniques de transmission de puissance 25, 26 sont respectivement formés sur l'élément rotorique 22 du générateur de courant 20 et sur l'extrémité amont de l'arbre de rotor basse pression 2, les pignons 25, 26 s'engrenant l'un avec l'autre pour transmettre le mouvement de rotation de l'arbre basse pression 2 à l'élément rotorique 22 du générateur de courant 20.

Lors du fonctionnement du turboréacteur 100, l'arbre de rotor basse pression 2 est entraîné en rotation par la turbine basse pression du turboréacteur 100.

L'arbre de rotor basse pression 2 entraîne l'électroaimant 22 en rotation autour de l'axe X3 et induit un courant électrique dans les enroulements 21 du générateur de courant 20. Le courant est acheminé par les bras 16 de maintien de la l'élément de capot fixe 12 via les câbles électriques 42 disposées dans les bras 16, les équipements situés principalement en aval de la soufflante étant alors alimentés en courant électrique.

Dans une autre forme de réalisation, en référence à la figure 3, un tourillon supplémentaire 17 est monté entre le disque de soufflante 19 et l'élément rotorique 22 du générateur de courant 20, le disque de soufflante 19 supportant les aubes de soufflante 18. Le tourillon 17, solidaire en rotation de l'arbre de rotor BP 2, entraîne l'élément rotorique 22 en rotation.

Le tourillon 17 est relié par une liaison vis écrou au disque de soufflante 19 ainsi qu'à l'élément rotorique 22. La fixation du générateur de courant 20 avec l'élément de capot fixe 12 demeure identique ; seul le moyen d'entraînement de l'élément rotorique 22 diffère par rapport à la forme de réalisation précédente.

L'invention concerne également le procédé de montage du générateur de courant 20 dans le turboréacteur 100.

On monte le générateur de courant 20 sur l'élément de capot fixe 12. Le générateur de courant 20 est ici vissé avec le capot.

On dispose l'élément de capot fixe 12 sur la soufflante 10 de manière à ce que l'élément rotorique 22 du générateur 20 entre en correspondance avec l'extrémité amont de l'arbre du rotor basse pression 2.

Le pignon conique de transmission de puissance 25 de l'élément statorique 22 est amené en correspondance avec le pignon conique de transmission de puissance 26 de l'arbre du rotor basse pression 2.

On immobilise l'élément de capot fixe 12 sur le carter de soufflante 14 avec les bras de maintien radiaux 16.

Les conduits 41 de lubrification du générateur de courant 20 sont connectés au générateur de courant 20 afin d'approvisionner le générateur de courant 20 en huile, les câbles électriques 42 étant reliés aux enroulements de l'élément statorique 21 du générateur de courant 20 afin d'acheminer le courant aux différents équipements de l'aéronef.

## Revendications

1. Turboréacteur à turbine à gaz à double corps, comportant un rotor haute pression (1) et un rotor basse pression, l'arbre du rotor basse pression (2) étant relié, à son extrémité amont, à une soufflante (10) logée dans un carter de soufflante (14), **caractérisé par le fait qu'**il comporte, en amont de la soufflante (10), un élément de capot fixe (12) centré sur l'axe du moteur (X3), sur lequel est monté un générateur de courant électrique (20) agencé pour prélever la puissance mécanique de l'arbre du rotor basse pression (2) et la convertir en puissance électrique.

2. Turboréacteur selon la revendication 1, dans lequel le générateur de courant (20) comporte un élément statorique (21), relié à l'élément de capot fixe (12), et un élément rotorique (22) entraîné par l'extrémité amont de l'arbre du rotor basse pression (2).

3. Turboréacteur selon la revendication 2, dans lequel des pignons de transmission de puissance (25, 26) sont respectivement formés sur l'élément rotorique (22) du générateur de courant (20) et sur l'extrémité amont de l'arbre du rotor basse pression (2), les pignons (25, 26) engrenant l'un dans l'autre pour transmettre le mouvement de rotation de l'arbre du rotor basse pression (2) à l'élément rotorique (22) du générateur de courant (20).

4. Turboréacteur selon la revendication 1 et comportant un disque de soufflante (19) sur lequel sont montées les aubes de soufflante (18), dans lequel un élément rotorique (22) du générateur de courant (20) est entraîné en rotation par un tourillon (17) solidaire dudit disque de soufflante (19).

5. Turboréacteur selon l'une des revendications 3 ou 4, dans lequel l'élément de capot (12) est relié au carter de soufflante (14) par des bras de maintien radiaux (16).

6. Turboréacteur selon la revendication 5, dans lequel des conduits (41) de lubrification du générateur de courant (20) sont ménagés dans les bras de maintien radiaux (16).

7. Turboréacteur selon l'une des revendications 5 ou 6, dans lequel des câbles électriques (42) sont ménagés dans les bras de maintien radiaux (16).

8. Procédé de montage d'un générateur de courant (20) dans la soufflante (10) d'un turboréacteur à gaz (100) selon l'une des revendications précédentes, dans lequel :
- on monte le générateur de courant (20) sur l'élément de capot fixe (12) ;
- on dispose l'élément de capot fixe (12) sur la soufflante (10) de manière à ce que l'élément rotorique (22) du générateur (20) entre en correspondance avec l'extrémité amont de l'arbre du rotor basse pression (2) ; et
- on immobilise l'élément de capot (12) sur le carter de soufflante (14) avec les bras de maintien radiaux (16, 17).

## Claims

1. A twin-spool gas turbine turbojet comprising a high-pressure rotor (1) and a low-pressure rotor, the low-pressure rotor shaft (2) being connected, at its upstream end, to a fan housed (10) in a fan casing (14), **characterized in that** the turbojet comprises, upstream of the fan (10), a fixed cowl element (12) centered on the axis of the engine (X3) and on which there is mounted an electric current generator (20) designed to take mechanical power off the low-pressure rotor shaft (2) and convert it into electrical power.

2. The turbojet as claimed in claim 1, in which the current generator (20) comprises a stator element (21) connected to the fixed cowl element (12), and a rotor element (22) driven by the upstream end of the low-pressure rotor shaft (2).

3. The turbojet as claimed in claim 2, in which power transmission pinions (25, 26) are formed respectively on the rotor element (22) of the current generator (20) and on the upstream end of the low-pressure rotor shaft (2), the pinions (25, 26) meshing with one another in order to transmit the rotational movement of the low-pressure rotor shaft (2) to the rotor element (22) of the current generator (20).

4. The turbojet as claimed in claim 1 and which comprises a fan disk (19) on which the fan blades (18) are mounted, in which a rotor element (22) of the current generator (20) is rotationally driven (17) by a journal secured to said fan disk (19).

5. The turbojet as claimed in one of claims 3 and 4, in which the cowl element (12) is connected to the fan casing (14) by radial retaining arms (16).

6. The turbojet as claimed in claim 5, in which ducts (41) for lubricating the current generator(20) are formed in the radial retaining arms (16).

7. The turbojet as claimed in one of claims 5 and 6, in which electric cables (42) are formed in the radial retaining arms (16).

8. A method of mounting a current generator (20) in the fan (10) of a gas turbojet (100) as claimed in one of the preceding claims, in which:
- the current generator (20)is mounted on the fixed cowl element (12);
- the fixed cowl element (12) is positioned on the fan (10) in such a way that the rotor element (22) of the generator (20) is in register with the upstream end of the low-pressure rotor shaft (2); and
- the cowl element (12) is immobilized on the fan casing (14) with the radial retaining arms (16, 17).

## Patentansprüche

1. Strahltriebwerk mit zweistufiger Gasturbine, aufweisend einen Hochdruckrotor (1) und einen Niederdruckrotor, wobei die Welle des Niederdruckrotors (2) an ihrem vorderseitigen Ende mit einem Gebläse (10) verbunden ist, welcher sich in einem Gebläsegehäuse (14) befindet, **dadurch gekennzeichnet, dass** es, vorderseitig des Gebläses (10), mittig auf der Motorachse (X3) ein festes Abdeckungselement (12) aufweist, an welchem ein elektrischer Stromgenerator (20) angebracht ist, der derart angeordnet ist, dass die mechanische Leistung der Welle des Niederdruckrotors (2) abgegriffen und in elektrische Leistung umgewandelt wird.

2. Strahltriebwerk nach Anspruch 1, wobei der Stromgenerator (20) ein Statorelement (21), das mit dem festen Abdeckungselement (12) verbunden ist, und ein Rotorelement (22), das vom vorderseitigen Ende der Welle des Niederdruckrotors (2) angetrieben wird, aufweist.

3. Strahltriebwerk nach Anspruch 2, wobei Leistungsübertragungsritzel (25, 26) auf dem Rotorelement (22) des Stromgenerators (20) beziehungsweise auf dem vorderseitigen Ende der Welle des Niederdruckrotors (2) gebildet sind, wobei die Ritzel (25, 26) ineinander greifen, um die Drehbewegung der Welle des Niederdruckrotors (2) auf das Rotorelement (22) des Stromgenerators (20) zu übertragen.

4. Strahltriebwerk nach Anspruch 1, das weiterhin eine Gebläsescheibe (19) aufweist, auf welcher die Gebläseschaufeln (18) angebracht sind, wobei ein Rotorelement (22) des Stromgenerators (20) von einem Drehzapfen (17), der fest mit der Gebläsescheibe (19) verbunden ist, in eine Drehbewegung versetzt wird.

5. Strahltriebwerk nach einem der Ansprüche 3 oder 4, wobei das Abdeckungselement (12) über radiale Stützarme (16) mit dem Gebläsegehäuse (14) verbunden ist.

6. Strahltriebwerk nach Anspruch 5, wobei Leitungen (41) zur Schmierung des Stromgenerators (20) in den radialen Stützarmen (16) vorgesehen sind.

7. Strahltriebwerk nach einem der Ansprüche 5 oder 6, wobei Stromkabel (42) in den radialen Stützarmen (16) vorgesehen sind.

8. Verfahren zum Anbringen eines Stromgenerators (20) im Gebläse (10) eines Gasstrahltriebwerks (100) nach einem der vorhergehenden Ansprüche, wobei:
- der Stromgenerator (20) auf dem festen Abdeckungselement (12) angebracht wird;
- das feste Abdeckungselement (12) derart auf dem Gebläse (10) angeordnet wird, dass das Rotorelement (22) des Generators (20) mit dem vorderseitigen Ende der Welle des Niederdruckrotors (2) in Zusammenwirkung tritt; und
- das Abdeckungselement (12) mit den radialen Stützarmen (16, 17) auf dem Gebläsegehäuse (14) befestigt wird.
